# EUROPEAN PATENT APPLICATION

(11) **EP 4 571 938 A1**
(43) Date of publication of application: **18.06.2025**
(21) Application number: 23216291.7
(22) Date of filing: 13.12.2023
(51) Int. Cl.: H01M 10/613, H01M 10/625, H01M 10/6556, H01M 10/6557, H01M 50/209, H01M 50/264

(54) **A BATTERY MODULE, A BATTERY PACK, AND A VEHICLE**

(71) Applicant: VOLVO TRUCK CORPORATION, 405 08 Göteborg (SE)
(72) Inventor: Rout, Dhirendra, 422 54 Göteborg (SE); Irannezhad, Mike, 411 20 Göteborg (SE); Lindelöw, Fredrik, 541 94 Skövde (SE); Jonsson, Kasper, 417 57 Göteborg (SE)
(74) Representative: Kransell & Wennborg KB

(57) **Abstract**

A battery module (1) for a battery pack (100), the battery module (1) having a longitudinal extension in a longitudinal direction (L), a width extension in a width direction (W) and a height extension in a height direction (H), wherein
- the battery module (1) comprises a plurality of battery cells (2) in the form of prismatic side terminal battery cells,
- the plurality of battery cells (2) are arranged in at least two layers (L 1, L2, L3) of battery cells,
- the battery cells of each layer are stacked together along the longitudinal direction (L) with side terminals (21) thereof facing in a first direction corresponding to the width direction (W) and in a second direction which is opposite to the first direction. A battery pack and a vehicle are also disclosed.

## Description

### TECHNICAL FIELD

The disclosure relates generally to energy storage systems. In particular aspects, the disclosure relates to a battery module, a battery pack, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery pack may comprise one or more separate battery modules, wherein each module comprises a stack of battery cells. The battery cells may be prismatic battery cells.

Due to the electrification trend, such as for vehicles, there is an ongoing strive to develop improved technology relating to battery packs and battery modules, such as to provide cost-effective configurations which are reliable, robust and/or space efficient.

### SUMMARY

According to a first aspect of the disclosure, a battery module for a battery pack is provided. The battery module has a longitudinal extension in a longitudinal direction, a width extension in a width direction and a height extension in a height direction, wherein
- the battery module comprises a plurality of battery cells in the form of prismatic side terminal battery cells,
- the plurality of battery cells are arranged in at least two layers of battery cells, wherein the at least two layers are provided on top of each other, as seen in the height direction,
- the battery cells of each layer are stacked together along the longitudinal direction with side terminals thereof facing in a first direction corresponding to the width direction and in a second direction which is opposite to the first direction,
- each layer of the battery module further comprises a first and a second end plate provided at respective outer ends of the layer, as seen in the longitudinal direction,
- the battery cells and the first and second end plates of each layer are fixed to each other by at least one strap which is wrapped around the battery cells and the first and second end plates, and
- the battery module further comprises a first battery module end plate and a second battery module end plate, wherein the first and second battery module end plates are provided at respective outer ends of the battery module, as seen in the longitudinal direction, and configured so that they cover the outer ends of each respective layer. The first aspect of the disclosure may seek to provide a space-efficient, robust, reliable and cost-effective battery module configuration for prismatic side terminal battery cells. A technical benefit may include that a compact battery module is provided in a cost-effective manner, which is able to store a high level of energy in a relatively small volume. For example, by covering the outer ends of each respective layer by the first battery module end plate and the second battery module end plate, such as by completely covering the outer ends of each respective layer by the first battery module end plate and the second battery module end plate, a compact, reliable and robust battery module may be achieved by using less parts. This in turn implies a more cost-effective configuration.

The first and the second end plates as used herein of each layer are not electrochemical battery cells, but are rather supports configured for supporting the battery cells of each layer, protecting the battery cells of each layer, and/or for accommodating the strap.

A strap as used herein shall be interpreted as a flexible, and/or bendable, elongated member which is configured to be wrapped around a plurality of battery cells for fixing the battery cells together.

A prismatic side terminal battery cell as used herein means an electrochemical battery cell comprising a prismatic cell housing and terminals on the cell housing, i.e., electrical connections, which are provided on opposite outer ends of the cell housing, as seen along a longitudinal extension of the battery cell.

Optionally in some examples, including in at least one preferred example, a first layer of the at least two layers comprises a first crossbeam member provided in-between two adjacent battery cells of the first layer, wherein the first crossbeam member extends in the width direction between outer sides of the first layer, as seen in the width direction. A technical benefit may include that a more robust layer of battery cells is provided, mitigating e.g. the risk of damaging the battery cells. A further technical benefit may include that a longer layer of battery cells may be provided, mitigating the risk of damaging the battery cells. A crossbeam member as used herein means a structural member configured for providing structural support and which is not an electrochemical battery cell.

Optionally in some examples, including in at least one preferred example, a second layer of the at least two layers, which is a consecutive layer to the first layer, comprises a second crossbeam member provided in-between two adj acent battery cells of the second layer, wherein the second crossbeam member extends in the width direction between outer sides of the second layer, as seen in the width direction, and wherein the first and second crossbeam members are located at substantially the same longitudinal position of the battery module such that one of the first and second crossbeam members is acting as a load bearing surface for the other one of the first and second crossbeam members. A technical benefit may include that a more robust and reliable battery module is provided with several layers of battery cells provided on top of each other, mitigating e.g. the risk of damaging the battery cells.

Optionally in some examples, including in at least one preferred example, the battery module further comprises a cooling plate member provided in-between two layers of the at least two layers. A technical benefit may include that a more efficient cooling of the two layers is achieved, e.g. by using one cooling plate member for cooling the two layers of battery cells.

Optionally in some examples, including in at least one preferred example, the cooling plate member comprises a coolant fluid inlet and/or outlet, wherein the first battery module end plate comprises an opening, and wherein the coolant fluid inlet and/or outlet are/is associated with the opening so that coolant fluid can be provided therethrough to/from the coolant fluid inlet and/or outlet. A technical benefit may include that the cooling fluid inlet and/or outlet can be directed to/from the battery module in a preferred direction corresponding to the longitudinal direction through the first battery module end plate, and not e.g. around an edge of the first battery module arrangement. In some examples, also the second battery module end plate comprises an opening, e.g., similar to the opening of the first battery module end plate.

Optionally in some examples, including in at least one preferred example, the cooling plate member is configured to provide structural rigidity to the battery module in the height direction. A technical benefit may include that the cooling plate member mitigates the risk of unwanted deflection of the layers of battery modules. Structural rigidity may for example be defined as a bending stiffness of the cooling plate member, i.e., how much the cooling plate member will deflect in relation to an applied load. For example, the structural rigidity may be defined by a threshold, such that the cooling plate member has a bending stiffness which is above a threshold. The threshold may correspond to a maximum deflection in the height direction which is less than 5%, 4%, 3%, 2%, or 1% of a maximum length of the cooling plate member, as measured in the longitudinal direction, when the layer(s) of battery cells above the cooling plate member is/are supported on the cooling plate member.

Optionally in some examples, including in at least one preferred example, the cooling plate member comprises at least one cooling plate attachment device located at a perimeter edge thereof, wherein the cooling plate attachment device is configured to attach the cooling plate member to another object. A technical benefit may include that an improved, more robust, fixation of the cooling plate member and/or the battery module is achieved in a space efficient manner without e.g. the risk of damaging the cooling plate member. By way of example, the at least one cooling plate attachment device may be in the form of a fixation hole on the perimeter edge which is configured to receive and retain a fastener.

Optionally in some examples, including in at least one preferred example, at least one of the first battery module end plate and the second battery module end plate comprises at least one battery module end plate attachment device which is configured to attach the battery module to another object. A technical benefit may include that a robust attachment to the other object is achieved in a facilitated manner, avoiding or reducing the need of attaching the battery module to the other object via any other attachment device.

Optionally in some examples, including in at least one preferred example, the at least one battery module end plate attachment device is protruding from the battery module end plate in a direction along the width direction. By way of example, the at least one battery module end plate attachment device may be provided at a corner portion of the first/second battery module end plate. A technical benefit may include an improved and robust attachment to the other object, e.g., wherein the battery module is attached to the other object at a corner of the battery module.

Optionally in some examples, including in at least one preferred example, the battery module further comprises a top cover and/or a bottom cover configured to cover the at least two layers of battery cells from above and/or below, as seen in the height direction. A technical benefit may include improved support and/or protection of the battery cells of the battery module.

Optionally in some examples, including in at least one preferred example, the top cover and/or the bottom cover are/is attached to the first and second battery module end plates, and optionally to one of the first and second crossbeam members as disclosed herein. A technical benefit may include an improved support and/or protection of the battery cells of the battery module.

Optionally in some examples, including in at least one preferred example, the at least one of the top cover and/or the bottom cover comprises at least one cover attachment device located at a perimeter edge thereof, wherein the cover attachment device is configured to attach the battery module to another object. A technical benefit may include an improved and robust attachment to the other object provided in a space efficient manner.

Optionally in some examples, including in at least one preferred example, at least one of the first and the second end plates comprises a groove in which the at least one strap is accommodated. A technical benefit may include a more reliable and robust fixation of the battery cells within the layer of battery cells. For example, the at least one groove may provide a predefined position for the strap, and/or avoid that the strap is unintentionally released from the layer of battery cells.

According to a second aspect of the disclosure, a battery pack is provided. The battery pack comprises at least two battery modules according to any one of the examples of the first aspect of the disclosure. The second aspect of the disclosure may seek to provide a space-efficient, robust, reliable and cost-effective battery pack for prismatic side terminal battery cells. A technical benefit may include that a compact battery pack is provided in a cost-effective manner, which is able to store a high level of energy in a relatively small volume. In addition, advantages and effects of the second aspect of the disclosure are analogous to the advantages and effects of the first aspect of the disclosure, and vice versa.

Optionally in some examples, including in at least one preferred example, the battery pack comprises a housing, wherein the at least two battery modules are located inside the housing. A technical benefit may include improved protection of the battery modules, mitigating the risk of damaging the battery modules.

Optionally in some examples, including in at least one preferred example, the at least two battery modules are attached to the housing by one or more fasteners which extend through a wall of the housing and into the at least one cooling plate attachment device as disclosed herein. A technical benefit may include that the battery modules are firmly attached to the housing via the at least one cooling plate member, e.g., the at least one cooling plate member is not only used for cooling, but also for attachment of the battery modules to the housing.

Optionally in some examples, including in at least one preferred example, the at least two battery modules are provided on top of each other, as seen in the height direction, and the at least two battery modules are attached to each other by any one or a combination of a pair of the at least one of the battery module end plate attachment device, the at least one cooling plate attachment device, and the at least one cover attachment device. A technical benefit may include that a reliable and robust attachment is achieved between the at least two battery modules in a space efficient manner.

According to a third aspect of the disclosure, a vehicle is provided. The vehicle comprises the battery module according to any one of the examples disclosed herein and/or the battery pack according to any one of the examples disclosed herein. Advantages and effects of the third aspect of the disclosure are analogous to the advantages and effects of the first and second aspects of the disclosure, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary battery module in a perspective view according to an example.
**FIG. 3** is an exemplary battery module in a perspective view according to an example.
**FIG. 4** is an exemplary portion of battery module in a perspective view according to an example.
**FIG. 5** is an exemplary portion of battery module in a perspective view according to an example.
**FIGS. 6a****-b** are an exemplary battery module in schematic views according to an example.
**FIG. 7** is an exemplary end plate of a battery module in a schematic view according to an example.
**FIG. 8** is an exemplary battery pack in a perspective view according to an example.
**FIG. 9** is an exemplary battery pack in a schematic view according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide a compact battery module which is cost-effective and able to store a high level of energy in a relatively small volume. Additionally, an aim of the present disclosure is to provide an improved battery module, battery pack, and/or vehicle, which at least partly alleviates one or more drawbacks of the prior art, or which at least is a suitable alternative. For example, by covering the outer ends of each respective layer by the first battery module end plate and the second battery module end plate, such as by completely covering the outer ends of each respective layer by the first battery module end plate and the second battery module end plate, a compact, reliable and robust battery module may be achieved by using less parts. This in turn implies a more cost-effective configuration.

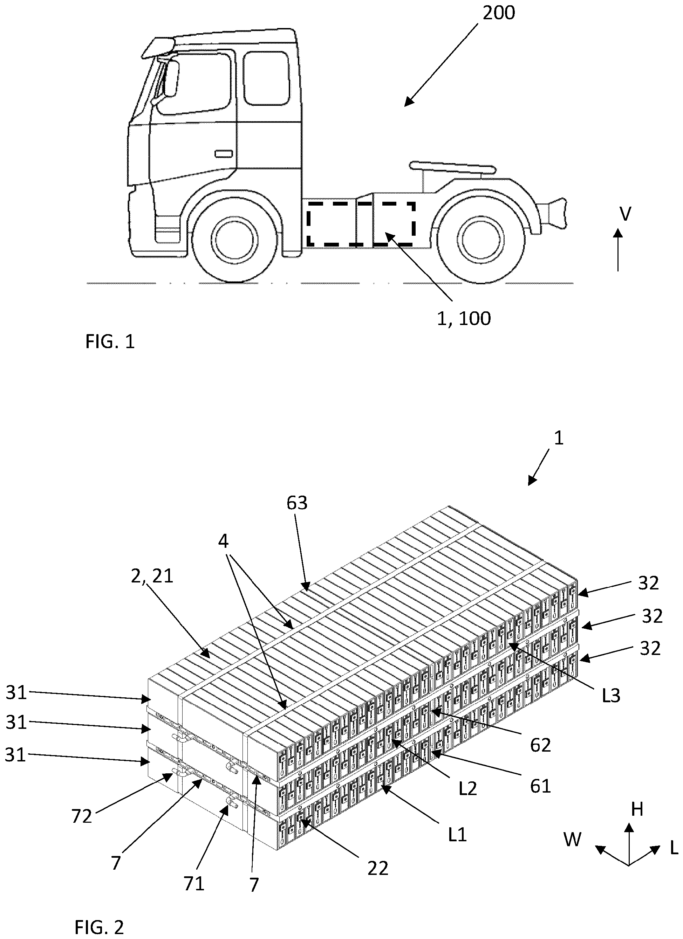

**FIG. 1** is an exemplary vehicle 200 in a side view according to an example. The vehicle 200 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 200 comprises a battery module 1 and a battery pack 100 according to an example disclosed herein. The battery pack 100 may at least partly be used for driving one or more electric motors (not shown) of the vehicle 200. The vehicle 200 may accordingly be an electric vehicle or a hybrid vehicle, i.e., a vehicle which at least partly uses electric power for propulsion. The battery module 1 and the battery pack 100 as disclosed herein may also be used in a stationary unit, such as a building and/or any stationary machinery.

**FIG. 2** is an exemplary battery module 1 in a perspective view according to an example. The battery module 1 has a longitudinal extension in a longitudinal direction L, a width extension in a width direction W and a height extension in a height direction H. The directions are perpendicular to each other and may correspond to a Cartesian coordinate system. The height direction H may correspond to a vertical direction V of the vehicle 200 when the vehicle 200 is provided on a flat horizontally extending surface. It shall however be noted that the battery module 1 may be oriented differently in a vehicle. For example, the height direction H may extend along a horizontal plane when the vehicle is provided on a flat horizontally extending surface.

The battery module 1 comprises a plurality of battery cells 2 in the form of prismatic side terminal battery cells. Accordingly, the battery cells 2 may be electrochemical battery cells comprising a prismatic cell housing 21 and terminals 22 on the cell housing 21, i.e., electrical connections, which are provided on opposite outer ends of the cell housing 21, as seen along a longitudinal extension of the battery cell 2. In this example, the longitudinal extension of the battery cell 2 extends along the width direction W of the battery module 1.

The plurality of battery cells 2 are arranged in at least two layers L1, L2, L3 of battery cells, wherein the at least two layers are provided on top of each other, as seen in the height direction H. In the shown example, there are three layers L1, L2, L3. It shall however be noted that in other examples there may only be two layers, and in yet further examples there may be more than three layers.

The battery cells of each layer are stacked together along the longitudinal direction L with side terminals 22 thereof facing in a first direction corresponding to the width direction W and in a second direction which is opposite to the first direction.

Each layer of the battery module 1 further comprises a first and a second end plate 31, 32 provided at respective outer ends of the layer, as seen in the longitudinal direction L. Accordingly, in this example there are three first end plates 31 on one side of the battery module 1 and three second end plates 32 on the other side of the battery module 1. A width of the first and/or second end plates, i.e. as measured along the longitudinal direction L, is/are typically less than a width of one of the battery cells 2.

The battery cells 2 and the first and second end plates 31, 32 of each layer L1, L2, L3 are fixed to each other by at least one strap 4 which is wrapped around the battery cells 2 and the first and second end plates 31, 32. In the shown example, there are two straps 4 for each layer, wherein the straps 4 are offset from each other in the width direction W. The at least one strap 4 is in the shown example wrapped around an axis which corresponds to the width direction W. As such, the at least one strap 4 will not conceal the sides with the side terminals 22.

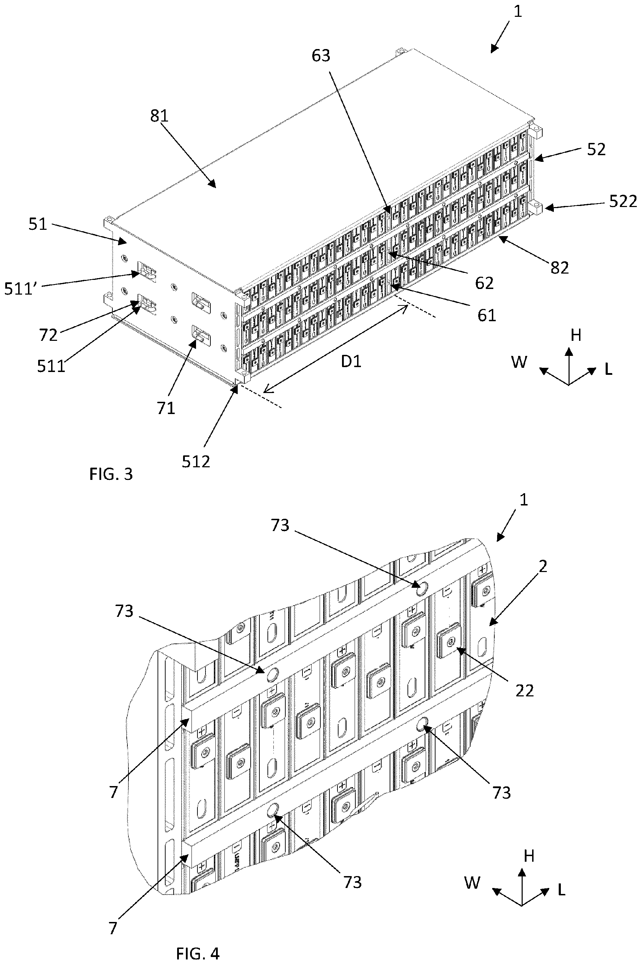

**FIG. 3** is an exemplary battery module 1 in a perspective view according to an example. The battery module 1 in FIG. 3 may for example be the battery module 1 shown in FIG. 2.

As shown, the battery module 1 further comprises a first battery module end plate 51 and a second battery module end plate 52, wherein the first and second battery module end plates 51, 52 are provided at respective outer ends of the battery module 1, as seen in the longitudinal direction L, and configured so that they cover the outer ends of each respective layer L1, L2, L3. In the shown example, the first and second battery module end plates 51, 52 are configured so that perimeter edges thereof completely enclose the outer ends of each respective layer L1, L2, L3, as seen in a sectional plane defined by the width direction W and the height direction H. The first and second battery module end plates 51, 52 are configured to provide structural rigidity to the battery module 1. For example, the first and second battery module end plates 51, 52 may be made of a metal, e.g., aluminum, or a polymer, such as a fiber reinforced polymer.

With reference to e.g., FIG. 2, a first layer L1 of the at least two layers may comprise a first crossbeam member 61 provided in-between two adj acent battery cells of the first layer L1. The first crossbeam member 61 may extend in the width direction W between outer sides of the first layer L1, as seen in the width direction W. In the shown example, each layer L1, L2, L3 comprises a respective crossbeam member 61, 62, 63. The crossbeam member 61, 62, 63 may be made of a material such that it provides structural rigidity. For example, the crossbeam member 61, 62, 63 may be made of a metal, e.g., aluminum, or a polymer, such as a fiber reinforced polymer.

As further shown in e.g., FIG. 2, a second layer L2 of the at least two layers, which is a consecutive layer to the first layer L1, may comprise a second crossbeam member 62 provided in-between two adjacent battery cells of the second layer L2, wherein the second crossbeam member 62 extends in the width direction W between outer sides of the second layer L2, as seen in the width direction W, and wherein the first and second crossbeam members 61, 62 are located at substantially the same longitudinal position D1 of the battery module 1 such that one of the first and second crossbeam members 61 is acting as a load bearing surface for the other one 62 of the first and second crossbeam members 61, 62.

The battery module 1 may further comprise a cooling plate member 7 which is provided in-between two layers of the at least two layers L1, L2, L3. For example, FIG. 2 depicts a cooling plate member 7 between the layers L1 and L2, and another cooling plate member 7 between the layers L2 and L3. Hence, in some examples, there may be a cooling plate member 7 in each intersection between two adjacent layers. As further shown in e.g. FIG. 3, the cooling plate member 7 may comprise a coolant fluid inlet and/or outlet 71, 72, wherein the first battery module end plate 51 comprises an opening 511, and wherein the coolant fluid inlet and/or outlet 71, 72 are/is associated with the opening 511 so that coolant fluid can be provided therethrough to/from the coolant fluid inlet and/or outlet 71, 72. In the shown example, there are two openings 511, 511', one for each cooling plate member 7. The cooling plate member 7 may hence comprise a cooling circuit for coolant which is fluidly connected to the coolant fluid inlet and/or outlet 71, 72.

The cooling plate member 7 may be configured to provide structural rigidity to the battery module 1 in the height direction H. This may be defined by a bending stiffness of the cooling plate member 7, i.e., how much the cooling plate member 7 will deflect in relation to an applied load thereon. For example, a maximum allowable deflection in the height direction H may be less than 5%, 4%, 3%, 2%, or 1% of a maximum length of the cooling plate member 7, as measured in the longitudinal direction L, when the layer(s) of battery cells 2 above the cooling plate member 7 is/are supported on the cooling plate member 7.

**FIG. 4** is an exemplary portion of a battery module 1 in a perspective view according to an example. For example, the portion of the battery module 1 shown in FIG. 4 may be a portion of the battery module(s) 1 as shown in FIGS. 2 and 3. As shown, the cooling plate member 7 may comprise at least one cooling plate attachment device 73 located at a perimeter edge thereof, wherein the cooling plate attachment device 73 is configured to attach the cooling plate member 7 to another object. In the shown example, the cooling plate attachment device 73 is in the form of a fixation hole configured to receive and retain a fastener (not shown), such as a screw or rivet. Accordingly, the fixation hole 73 may be a threaded hole. In the shown example, the cooling plate attachment device 73, e.g. the fixation hole, extends in the width direction W. In the shown example, the cooling plate member 7 comprises a plurality of cooling plate attachment devices 73 located at the perimeter edge thereof.

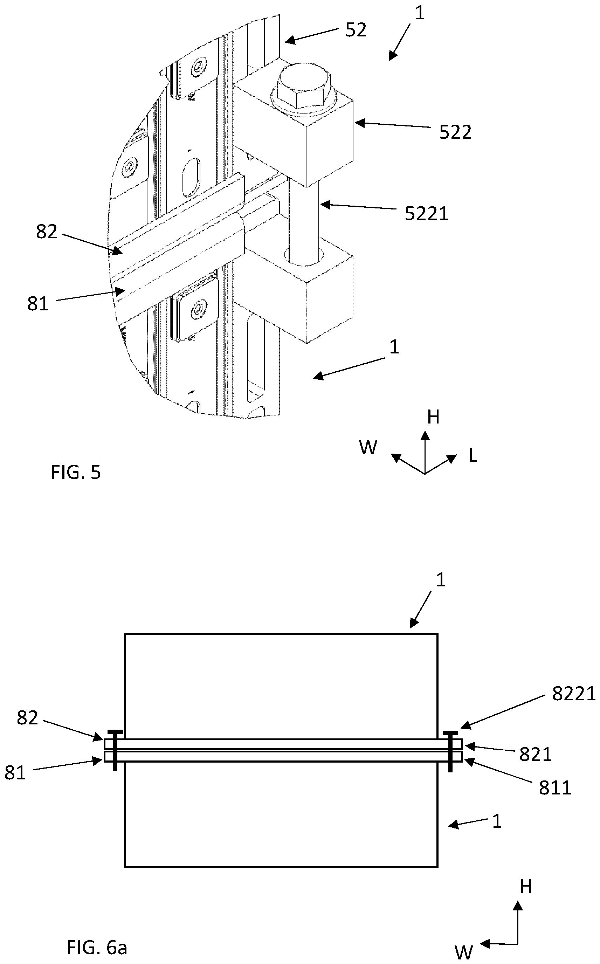

**FIG. 5** is an exemplary portion of battery module 1 in a perspective view according to an example. For example, the portion of the battery module 1 shown in FIG. 5 may be a portion of the battery module 1 as shown in FIG. 3. With reference to e.g. FIGS. 3 and 5, at least one of the first battery module end plate 51 and the second battery module end plate 52 may comprise at least one battery module end plate attachment device 512, 522 which is configured to attach the battery module 1 to another object. In the shown example, the end plate attachment devices 512, 522 are configured to attach the battery module 1 to an object below the battery module 1, as seen in the height direction H. As further shown, the at least one battery module end plate attachment device 512, 522 may protrude from the battery module end plate 51, 52 in a direction along the width direction W. In the shown example, each battery module end plate attachment device 512, 522 is a protruding portion with a fixation hole configured to receive and retain a fastener 5221, such as a screw, bolt or rivet. The fixation hole of the battery module end plate attachment device 512, 522 is in the shown example extending in the height direction H. As further shown in FIG. 5, the object below the battery module 1 is another battery module according to an example of the first aspect of the disclosure. As shown, the at least one battery module end plate attachment device 512, 522 may be provided at a corner portion of the first/second battery module end plate 51, 52, i.e., a corner portion which is at a top of the battery module 1 or at a bottom of the battery module 1, as seen in the height direction H. For example, as may be gleaned in FIG. 3, each battery module end plate 51, 52 may have four battery module end plate attachment devices, one at each corner portion.

FIG. 3 further depicts that the battery module 1 may comprise a top cover and/or a bottom cover 81, 82 configured to cover the at least two layers of battery cells 2 from above and/or below, as seen in the height direction H. The top cover and/or the bottom cover 81, 82 may be attached to the first and second battery module end plates 51, 52, and optionally to one of the first and second crossbeam members 61, 63. For example, the attachment may be achieved by at least one weld and/or by at least one fastener.

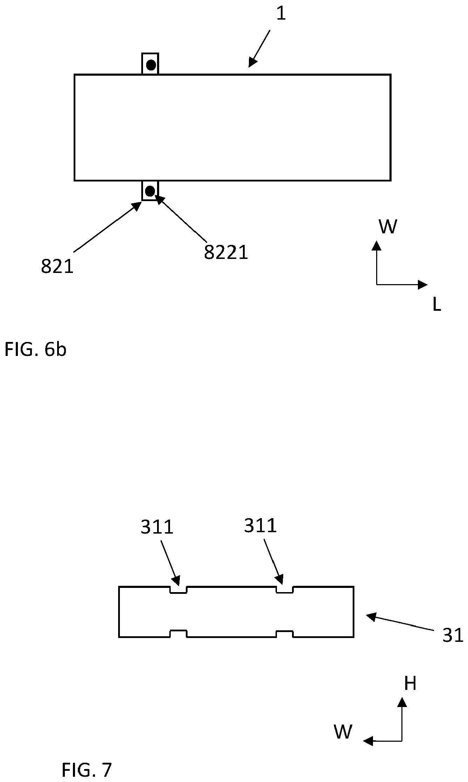

**FIGS. 6a** **and** **6b** depict a battery module 1 in schematic views according to an example. More specifically, FIG. 6a shows the battery module 1 in a sectional view defined by the width direction W and the height direction H, and FIG. 6b shows the battery module 1 from above. In the example shown in FIG. 6a, the battery module 1 is provided on top of a similar battery module 1 as disclosed herein. For example, the battery modules 1 in FIGS. 6a-b may be configured as the battery module 1 as shown in FIG. 3. As shown in FIGS. 6a-b, the at least one of the top cover 81 and/or the bottom cover 82 may comprise at least one cover attachment device 811, 821 located at a perimeter edge thereof, wherein the cover attachment device 811, 821 is configured to attach the battery module 1 to another object. In the shown example, the other object is a battery module 1 according to an example of the first aspect of the disclosure. In the shown example, each cover attachment device 811, 821 is a protruding portion with a fixation hole configured to receive and retain a fastener 8221, such as a screw, bolt or rivet. The cover attachment device 811, 821 protrudes along the width direction W. The fixation hole of the cover attachment device 811, 821 is in the shown example extending in the height direction H. As such, the fastener 8221 is insertable into the fixation hole(s) in the height direction H. As shown in FIG. 6b, a similar cover attachment device may also be provided on an opposite side of the battery module 1.

**FIG. 7** is an exemplary end plate 31 of a battery module 1 in a schematic view according to an example. For example, the end plate 31 in FIG. 7 may be the end plate 31 shown in FIG. 2. In the shown example, the end plate 31 comprises a groove 311 in which the at least one strap 4 (not shown) is configured to be accommodated. The groove 311 may as shown be provided both at an upper edge and a bottom edge of the end plate 31, as seen in the height direction H. The at least one groove 311 may provide a predefined position for the strap 4, and/or avoid that the strap 4 is unintentionally released from the layer of battery cells 2. The predefined position is as shown preferably a predefined position in the width direction W. The end plate 31 in the shown example has two grooves 311 for accommodating two straps 4, i.e., one strap 4 in each groove 311.

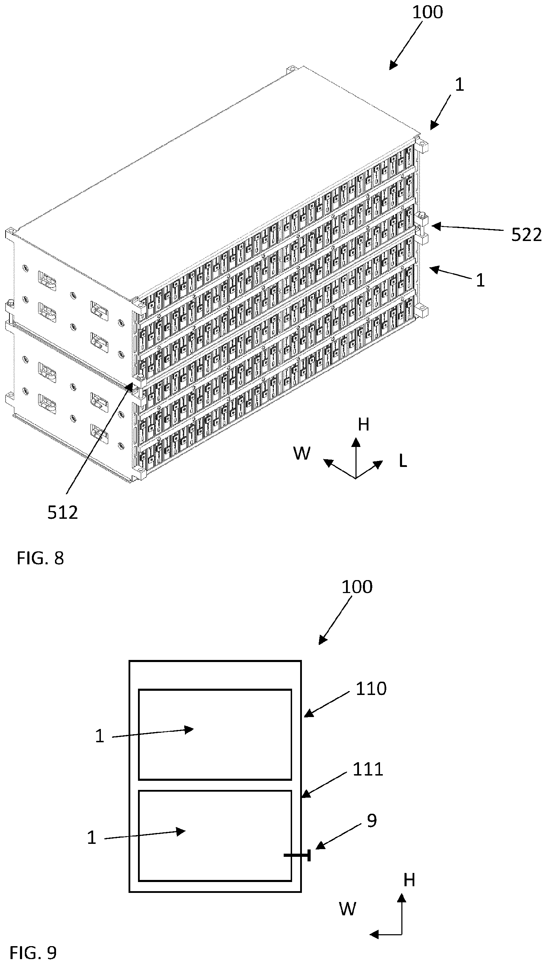

**FIG. 8** is an exemplary battery pack 100 in a perspective view according to an example. The battery pack 100 comprises at least two battery modules 1 according to any one of the examples of the first aspect of the disclosure. The battery pack 100 may for example comprise the battery modules 1 as depicted in FIGS. 5 and 6. The battery pack 100 has a longitudinal extension, a width extension and a height extension which correspond to the respective extensions of each battery module 1.

FIG. 9 is an exemplary battery pack 100 in a schematic view according to an example. The battery pack 100 in FIG. 9 may for example be the battery pack 100 in FIG. 8. The battery pack 100 may comprise a housing 110, wherein the at least two battery modules 1 are located inside the housing 110. The at least two battery modules 1 may be attached to the housing 110 by one or more fasteners 9 which extend through a wall 111 of the housing 110 and into the at least one cooling plate attachment device 73 as mentioned in the above. In the shown example, the wall 111 is a side wall which extends in the height direction H and the longitudinal direction L. The one or more fasteners 9 may as shown extend in the width direction W through the wall 111.

As further shown in e.g., FIGS. 8 and 9, the at least two battery modules 1 may be provided on top of each other, as seen in the height direction H, and the at least two battery modules 1 may be attached to each other by any one or a combination of a pair of the at least one of the battery module end plate attachment device 512, 522 and the at least one cover attachment device 811, 821.

The battery module(s) 1 may further comprise a thermal interface material (TIM) provided in-between at least two layers of the at least two layers of battery cells L1, L2, L3.

The battery cells 2 of at least one layer of the at least two layers of battery cells may be arranged with plus and minus poles in an alternating manner on each respective side of the layer, or arranged with the plus poles on one side of the layer and the minus poles on the other side of the layer. The battery cells 2 of a layer L1, L2, L3 may be electrically connected. Each layer L1, L2, L3 is preferably electrically connected to each other.

In the below, possible features and feature combinations of the present disclosure are presented as a list of Examples.

Example 1: A battery module (1) for a battery pack (100), the battery module (1) having a longitudinal extension in a longitudinal direction (L), a width extension in a width direction (W) and a height extension in a height direction (H), wherein
- the battery module (1) comprises a plurality of battery cells (2) in the form of prismatic side terminal battery cells,
- the plurality of battery cells (2) are arranged in at least two layers (L 1, L2, L3) of battery cells, wherein the at least two layers are provided on top of each other, as seen in the height direction (H),
- the battery cells of each layer are stacked together along the longitudinal direction (L) with side terminals (22) thereof facing in a first direction corresponding to the width direction (W) and in a second direction which is opposite to the first direction,
- each layer of the battery module (1) further comprises a first and a second end plate (31, 32) provided at respective outer ends of the layer, as seen in the longitudinal direction (L),
- the battery cells and the first and second end plates of each layer are fixed to each other by at least one strap (4) which is wrapped around the battery cells and the first and second end plates, and
- the battery module (1) further comprises a first battery module end plate (51) and a second battery module end plate (52), wherein the first and second battery module end plates (51, 52) are provided at respective outer ends of the battery module (1), as seen in the longitudinal direction (L), and configured so that they cover the outer ends of each respective layer (L1, L2, L3).

Example 2: The battery module (1) according to example 1, wherein a first layer (L1) of the at least two layers comprises a first crossbeam member (61) provided in-between two adjacent battery cells of the first layer (L1), and wherein the first crossbeam member (61) extends in the width direction (W) between outer sides of the first layer (L1), as seen in the width direction (W).

Example 3: The battery module according to example 2, wherein a second layer (L2) of the at least two layers, which is a consecutive layer to the first layer (L1), comprises a second crossbeam member (62) provided in-between two adj acent battery cells of the second layer (L2), and wherein the second crossbeam member (62) extends in the width direction (W) between outer sides of the second layer (L2), as seen in the width direction (W), and wherein the first and second crossbeam members (61, 62) are located at substantially the same longitudinal position (D1) of the battery module (1) such that one of the first and second crossbeam members (61) is acting as a load bearing surface for the other one (62) of the first and second crossbeam members (61, 62).

Example 4: The battery module (1) according to any one of the preceding examples, further comprising a cooling plate member (7) provided in-between two layers of the at least two layers.

Example 5: The battery module (1) according to example 4, wherein the cooling plate member (7) comprises a coolant fluid inlet and/or outlet (71, 72), wherein the first battery module end plate (51) comprises an opening (511), and wherein the coolant fluid inlet and/or outlet are/is associated with the opening (511) so that coolant fluid can be provided therethrough to/from the coolant fluid inlet and/or outlet.

Example 6: The battery module (1) according to any one of examples 4 or 5, wherein the cooling plate member (7) is configured to provide structural rigidity to the battery module (1) in the height direction (H).

Example 7: The battery module according to example 6, wherein the cooling plate member (7) comprises at least one cooling plate attachment device (73) located at a perimeter edge thereof, wherein the cooling plate attachment device (73) is configured to attach the cooling plate member (7) to another object.

Example 8: The battery module (1) according to any one of the preceding examples, wherein at least one of the first battery module end plate (51) and the second battery module end plate (52) comprises at least one battery module end plate attachment device (512, 522) which is configured to attach the battery module (1) to another object.

Example 9: The battery module (1) according to example 8, wherein the at least one battery module end plate attachment device (512, 522) is protruding from the battery module end plate (51, 52) in a direction along the width direction (W).

Example 10: The battery module (1) according to any one of the preceding examples, further comprising a top cover and/or a bottom cover (81, 82) configured to cover the at least two layers of battery cells from above and/or below, as seen in the height direction (H).

Example 11: The battery module (1) according to example 10, wherein the top cover and/or the bottom cover are/is attached to the first and second battery module end plates (51, 52), and optionally to one of the first and second crossbeam members according to examples 2 or 3.

Example 12: The battery module (1) according to any one of examples 10-11, wherein the at least one of the top cover and/or the bottom cover comprises at least one cover attachment device (811) located at a perimeter edge thereof, wherein the cover attachment device (811) is configured to attach the battery module (1) to another object.

Example 13: The battery module according to any one of the preceding examples, wherein at least one of the first and the second end plates (31, 32) comprises a groove (311) in which the at least one strap (4) is accommodated.

Example 14: The battery module (1) according to any one of the preceding examples, further comprising a thermal interface material (TIM) provided in-between at least two layers of the at least two layers of battery cells.

Example 15: The battery module (1) according to any one of the preceding examples, wherein the battery cells (2) of at least one layer of the at least two layers of battery cells are arranged with plus and minus poles in an alternating manner on each respective side of the layer, or arranged with the plus poles on one side of the layer and the minus poles on the other side of the layer.

Example 16: A battery pack (100) comprising at least two battery modules (1) according to any one of the preceding examples.

Example 17: The battery pack (100) according to example 16, comprising a housing (110), wherein the at least two battery modules (1) are located inside the housing (110).

Example 18: The battery pack (100) according to example 17, wherein the at least two battery modules are attached to the housing (110) by one or more fasteners (9) which extend through a wall (111) of the housing (110) and into the at least one cooling plate attachment device (73) according to example 7.

Example 19: The battery pack (100) according to any one of examples 16-18, wherein the at least two battery modules (1) are provided on top of each other, as seen in the height direction (H), and wherein the at least two battery modules (1) are attached to each other by any one or a combination of a pair of the at least one of the battery module end plate attachment device (512, 522) according to claim 8, the at least one cooling plate attachment device (73) according to claim 7, and the at least one cover attachment device (811) according to claim 12.

Example 20: A vehicle (200) comprising the battery module (1) according to any one of examples 1-15 and/or the battery pack (100) according to any one of examples 16-19.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery module (1) for a battery pack (100), the battery module (1) having a longitudinal extension in a longitudinal direction (L), a width extension in a width direction (W) and a height extension in a height direction (H), wherein
- the battery module (1) comprises a plurality of battery cells (2) in the form of prismatic side terminal battery cells,
- the plurality of battery cells (2) are arranged in at least two layers (L 1, L2, L3) of battery cells, wherein the at least two layers are provided on top of each other, as seen in the height direction (H),
- the battery cells of each layer are stacked together along the longitudinal direction (L) with side terminals (22) thereof facing in a first direction corresponding to the width direction (W) and in a second direction which is opposite to the first direction,
- each layer of the battery module (1) further comprises a first and a second end plate (31, 32) provided at respective outer ends of the layer, as seen in the longitudinal direction (L),
- the battery cells and the first and second end plates of each layer are fixed to each other by at least one strap (4) which is wrapped around the battery cells and the first and second end plates, and
- the battery module (1) further comprises a first battery module end plate (51) and a second battery module end plate (52), wherein the first and second battery module end plates (51, 52) are provided at respective outer ends of the battery module (1), as seen in the longitudinal direction (L), and configured so that they cover the outer ends of each respective layer (L1, L2, L3).

2. The battery module (1) according to claim 1, wherein a first layer (L1) of the at least two layers comprises a first crossbeam member (61) provided in-between two adjacent battery cells of the first layer (L1), and wherein the first crossbeam member (61) extends in the width direction (W) between outer sides of the first layer (L 1), as seen in the width direction (W).

3. The battery module according to claim 2, wherein a second layer (L2) of the at least two layers, which is a consecutive layer to the first layer (L1), comprises a second crossbeam member (62) provided in-between two adjacent battery cells of the second layer (L2), and wherein the second crossbeam member (62) extends in the width direction (W) between outer sides of the second layer (L2), as seen in the width direction (W), and wherein the first and second crossbeam members (61, 62) are located at substantially the same longitudinal position (D1) of the battery module (1) such that one of the first and second crossbeam members (61) is acting as a load bearing surface for the other one (62) of the first and second crossbeam members (61, 62).

4. The battery module (1) according to any one of the preceding claims, further comprising a cooling plate member (7) provided in-between two layers of the at least two layers.

5. The battery module (1) according to claim 4, wherein the cooling plate member (7) comprises a coolant fluid inlet and/or outlet (71, 72), wherein the first battery module end plate (51) comprises an opening (511), and wherein the coolant fluid inlet and/or outlet are/is associated with the opening (511) so that coolant fluid can be provided therethrough to/from the coolant fluid inlet and/or outlet.

6. The battery module (1) according to any one of claims 4 or 5, wherein the cooling plate member (7) is configured to provide structural rigidity to the battery module (1) in the height direction (H).

7. The battery module according to claim 6, wherein the cooling plate member (7) comprises at least one cooling plate attachment device (73) located at a perimeter edge thereof, wherein the cooling plate attachment device (73) is configured to attach the cooling plate member (7) to another object.

8. The battery module (1) according to any one of the preceding claims, wherein at least one of the first battery module end plate (51) and the second battery module end plate (52) comprises at least one battery module end plate attachment device (512, 522) which is configured to attach the battery module (1) to another object.

9. The battery module (1) according to claim 8, wherein the at least one battery module end plate attachment device (512, 522) is protruding from the battery module end plate (51, 52) in a direction along the width direction (W).

10. The battery module (1) according to any one of the preceding claims, further comprising a top cover and/or a bottom cover (81, 82) configured to cover the at least two layers of battery cells from above and/or below, as seen in the height direction (H).

11. The battery module (1) according to claim 10, wherein the top cover and/or the bottom cover are/is attached to the first and second battery module end plates (51, 52), and optionally to one of the first and second crossbeam members according to claims 2 or 3.

12. The battery module (1) according to any one of claims 10-11, wherein the at least one of the top cover and/or the bottom cover comprises at least one cover attachment device (811) located at a perimeter edge thereof, wherein the cover attachment device (811) is configured to attach the battery module (1) to another object.

13. The battery module (1) according to any one of the preceding claims, wherein at least one of the first and the second end plates (31, 32) comprises a groove (311) in which the at least one strap (4) is accommodated.

14. A battery pack (100) comprising at least two battery modules (1) according to any one of the preceding claims.

15. A vehicle (200) comprising the battery module (1) according to any one of claims 1-13 and/or the battery pack (100) according to claim 14.
